# EUROPÄISCHE PATENTANMELDUNG

(11) **EP 2 511 562 A1**
(43) Veröffentlichungstag der Anmeldung: **17.10.2012**
(21) Anmeldenummer: 11003065.7
(22) Anmeldetag: 12.04.2011
(51) Int. Cl.: F16F 7/14

(54) **Dämpfungselement insbesondere zur Stoß-, Schwingungs- und/oder Schallisolierung eines Körpers**

(71) Anmelder: Willbrandt KG, 22525 Hamburg (DE)
(72) Erfinder: Müller, Wilhelm, 27419 Wohnste (DE)
(74) Vertreter: Müller Verweyen

(57) **Zusammenfassung**

Ein Dämpfungselement (10) insbesondere zur Stoß-, Schwingungs-und/oder Schallisolierung eines Körpers (25) gegen einen Grund (26), umfasst zwei starre, voneinander beabstandet angeordnete Stützelemente (11, 12) zur Abstützung an dem Körper (25) bzw. dem Grund (26), und eine Mehrzahl von sich bogenförmig zwischen den Stützelementen (11, 12) erstreckenden Seilelementen (15-18, 35-38), die an den Stützelementen (11, 12) beabstandet voneinander befestigt sind. Mindestens zwei der Seilelemente (15, 16; 17, 18; 35, 36; 37, 38) sind in einem Abstand zu beiden Stützelementen (11, 12,) mittels eines Klemmelements (23, 24, 33, 34) zusammengeklemmt.

## Beschreibung

Die Erfindung betrifft ein Dämpfungselement insbesondere zur Stoß-, Schwingungs- und/oder Schallisolierung eines Körpers gegen einen Grund, wobei das Dämpfungselement zwei starre, voneinander beabstandet angeordnete Stützelemente zur Abstützung gegen den Körper bzw. den Grund, und eine Mehrzahl von sich bogenförmig zwischen den Stützelementen erstreckenden Seilelementen umfasst, die an den Stützelementen beabstandet voneinander befestigt sind.

Ein derartiges Dämpfungselement ist beispielsweise aus der WO 88 08933 A1 bekannt. Dieses umfasst ein schraubenförmig gebogenes Drahtseil, das in zwei am Umfang der Drahtseilanordnung gegenüberliegend angeordneten Barren eingespannt ist. Im Allgemeinen ist bei dieser Anordnung die Federsteifigkeit in der axialen Druckrichtung wesentlich höher als in den radialen Schubrichtungen. In einigen Anwendungen kann jedoch eine höhere Federsteifigkeit in mindestens einer Schubrichtung erwünscht sein, beispielsweise im Fall eines an einer vertikalen Wand aufzuhängenden Körpers, etwa einem Schaltschrank. Da die axiale und die radialen Federsteifigkeiten in der herkömmlichen Bauweise jedoch nicht unabhängig voneinander einstellbar sind, führt eine Erhöhung der Federsteifigkeit in einer radialen Schubrichtung zwangsläufig auch zu einer unerwünschten Erhöhung der Federsteifigkeit in der axialen Druckrichtung. Bei einem an einer vertikalen Wand aufzuhängenden Körper ist es möglich, diese Problematik zu umgehen, indem die Dämpfungselemente mit vertikaler Druckachse angeordnet werden. Dies erfordert jedoch Konsolen an dem Körper und dem Grund, was den Aufwand insgesamt deutlich erhöht und zu einer unerwünschten Vergrößerung des Abstands zwischen Körper und Grund führt.

Die Aufgabe der Erfindung besteht darin, ein Dämpfungselement der eingangs genannten Art bereitzustellen, mit dem die geschilderten Nachteile des Standes der Technik vermieden werden können.

Die Erfindung löst diese Aufgabe mit den Merkmalen der unabhängigen Ansprüche. Mittels des erfindungsgemäßen mindestens einen Klemmelements zum Zusammenklemmen mindestens zweier Seilelemente in einem Abstand zu beiden Stützelementen kann die Federsteifigkeit in einer radialen Schubrichtung, insbesondere der Schubrichtung senkrecht zu einer Verbindungslinie zwischen den Klemmelementen, erheblich erhöht werden, ohne dass die Federsteifigkeit in der anderen radialen Schubrichtung oder in der axialen Druckrichtung dadurch signifikant beeinträchtigt wird. Durch geeignete Anordnung, Auslegung und/oder Kombination zusammengeklemmter Seilelemente kann die Federsteifigkeit unabhängig in der beschriebenen, oder in jeder, radialen Schubrichtung relativ zu der Federsteifigkeit in der axialen Druckrichtung wie gewünscht eingestellt werden.

Vorzugsweise ist die Spreizung und Länge der zusammengeklemmten Seilelemente so eingestellt, dass im statischen Lastfall bzw. im Arbeitsbereich des Dämpfungselements die Federsteifigkeit in einer radialen Schubrichtung in einem gewünschten Verhältnis zu der Federsteifigkeit des Dämpfungselements in der axialen Richtung liegt. Das genannte Verhältnis der Federsteifigkeiten liegt vorzugsweise zwischen 1/3 und 3, weiter vorzugsweise zwischen 1/2 und 2, noch weiter vorzugsweise zwischen 2/3 und 3/2 und noch weiter vorzugsweise zwischen 3/4 und 4/3. In einigen Anwendungen kann es besonders vorteilhaft sein, wenn das beschriebene Verhältnis der Federsteifigkeiten etwa Eins ist, so dass die Druck- und Schubcharakteristik in der entsprechenden Schubrichtung etwa gleich sind.

Die Erfindung wird im Folgenden anhand bevorzugter Ausführungsformen unter Bezugnahme auf die beigefügten Figuren erläutert. Dabei zeigt:
- Fig. 1: eine perspektivische Ansicht eines Dämpfungselements in einer Ausführungsform;
- Fig. 2: eine Anwendung für das Dämpfungselement aus Fig. 1;
- Fig. 3: eine Ansicht von unten auf das Dämpfungselement aus Fig. 1; und
- Fig. 4: eine Ansicht von unten auf ein Dämpfungselement in einer weiteren Ausführungsform.

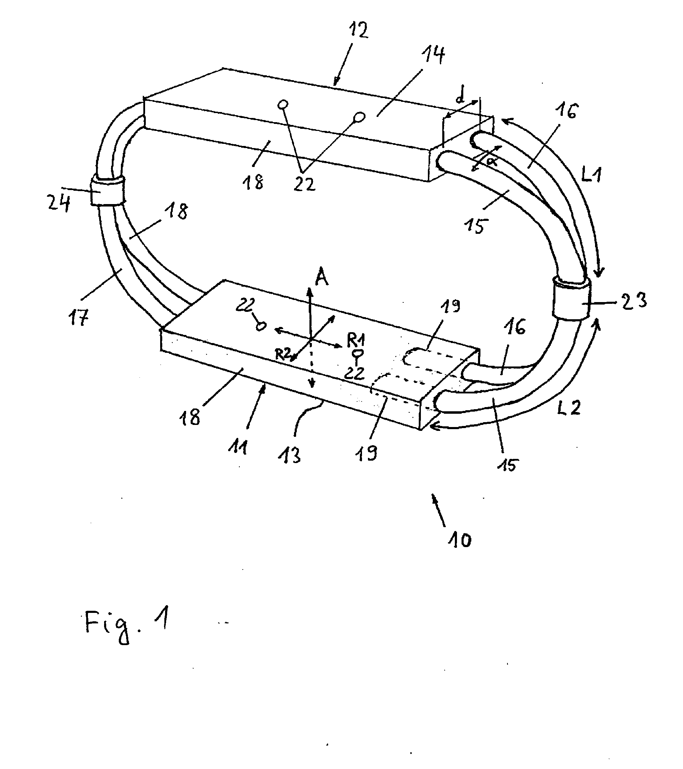

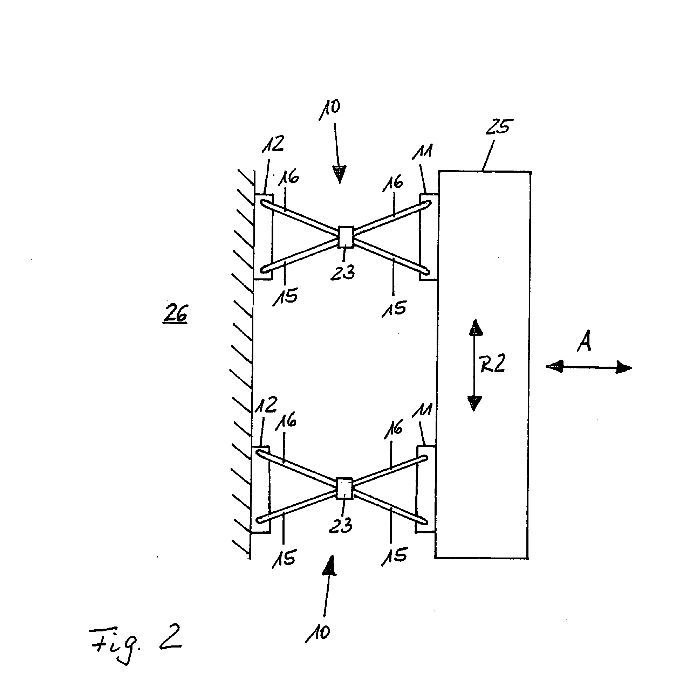

Das Dämpfungselement 10 gemäß Figuren 1 bis 3 umfasst zwei insbesondere plattenförmige Stützelemente 11, 12, die vorzugsweise identisch ausgeführt sein können und jeweils eine Anlagefläche 13, 14 zur Abstützung an einem zu isolierenden Körper bzw. Grund aufweisen. Zur Befestigung der Stützelemente 11, 12 an dem zu isolierenden Körper 25 bzw. dem Grund 26 (siehe Figur 2) weisen die Stützelemente 11, 12 beispielsweise entsprechende Befestigungsöffnungen 22 auf. Das Dämpfungselement 10 umfasst weiterhin hinreichend biegesteife Seilelemente 15-18, die vorteilhaft als Biegefedern ausgeführt sind. Vorzugsweise handelt es sich um metallische Seilelemente, insbesondere Drahtseilelemente. Es sind aber auch nichtmetallische Seilelemente, beispielsweise aus Kohlenstofffasern, denkbar. Schließlich sind auch biegeelastische Stäbe nicht ausgeschlossen. In der Ausführungsform gemäß Figur 1 handelt es sich beispielsweise um vier separate Drahtseilelemente 15-18, wobei jedes Drahtseilelement 15, 16, 17, 18 mit einem Ende in dem Stützkörper 11 und mit dem anderen Ende in dem Stützkörper 12 eingespannt ist.

Die Befestigung der Drahtseilelemente 15-18 an den Stützkörpern 11, 12 kann auf geeignete Weise erfolgen, beispielsweise indem die Drahtseilelemente 15-18 in den Stützkörpern 11, 12 eingespannt sind. In einer besonders einfachen und daher bevorzugten Ausführungsform weisen die Stützelemente 11, 12 Bohrungen 19 auf, die einen gleich großen oder geringfügig größeren Innendurchmesser aufweisen als die Außendurchmesser der Drahtseilelemente 15-18. Die Drahtseilelemente 15-18 können in die Bohrungen 19 eingeschoben und mittels eines Presswerkzeugs darin verpresst werden. In Figur 1 sind nur zwei Bohrungen 19 gezeigt, auf die Darstellung der übrigen sechs Bohrungen 19 wurde verzichtet. Die Bohrungen 19 liegen vorzugsweise in der Ebene der plattenförmigen Stützelemente 11, 12.

Andere Befestigungen der Drahtseilelemente 15-18 an den Stützelementen 11, 12 sind denkbar. In einer nicht gezeigten Ausführungsform können beispielsweise platten- oder bügelförmige Klemmteile vorgesehen sein, die beispielsweise mittels Schrauben an den Stützelementen befestigbar sein können, um die Drahtseilelemente 15-18 an den Stützelementen 11, 12 festzuklemmen.

Es sind andere Ausführungsformen als die in Figur 1 gezeigte denkbar. Beispielsweise können die Drahtseilelemente 15-18 von einem durchgehenden, schraubenförmig angeordneten Drahtseil gebildet werden, wie dies beispielsweise aus der WO 88 08933 A1 bekannt ist, wobei die Bohrungen 19 in diesem Fall zweckmäßigerweise als Durchgangsbohrungen ausgebildet sind. Des Weiteren sind andere Arten der Befestigung der Seilenden an den Stützkörpern 11, 12 möglich. Beispielsweise können anstelle eines Grundkörpers 18 und mehrerer Klemmstücke 17 alternativ zwei Klemmbarren vorgesehen sein, wie dies beispielsweise aus der WO 88 08933 A1 bekannt ist. Weitere geeignete Ausführungen sind denkbar.

Das Dämpfungselement 10 weist drei Hauptrichtungen auf, nämlich (siehe Figur 1) die axiale Richtung oder Druckrichtung A und zwei radiale oder Schubrichtungen R1, R2, wobei sämtliche Richtungen A, R1, R2 wechselseitig senkrecht zueinander orientiert sind. Die Richtungen A, R1 und R2 sind dabei definiert durch Krafteinwirkungen auf das an einem zu isolierenden Körper 25 befestigte Stützelement 11 (siehe Figur 2). Die axiale Richtung A bezeichnet eine senkrecht zu der Anlagefläche 13 orientierte Druck-(bzw. Zug-)krafteinwirkung auf das Stützelement 11. Die erste radiale Richtung R1 bezeichnet eine in einer Federebene liegende Schubkrafteinwirkung auf das Stützelement 11. Die Federebene bezeichnet dabei eine Ebene, die durch die bogenförmigen, Schleifen bildenden Seilelemente 15-18 aufgespannt wird. Bei einer schraubenförmigen Federanordnung ist die Schraubenachse, bei einer insgesamt schleifen- oder ringförmigen Federanordnung wie in Figur 1 die Schleifen- oder Ringachse R2 senkrecht zu der Federebene orientiert. Die zweite radiale Richtung R2 bezeichnet demnach eine senkrecht zu der Federebene orientierte Schubkrafteinwirkung auf das Stützelement 11.

Die Drahtseilelemente 15 und 16 sind mittels eines Klemmelements 23, die Drahtseilelemente 17 und 18 mittels eines weiteren Klemmelements 24 auf Kontakt festsitzend, d.h. relativ zueinander verschiebe- und verdrehsicher zusammengeklemmt. Der Abstand L1, L2 jedes Klemmelements 23, 24 zu den Stützelementen 11, 12 ist vorzugsweise gleich groß (L1 etwa gleich L2), so dass das Klemmelement 23, 24 vorzugsweise etwa mittig zwischen beiden Stützelementen 11, 12 angeordnet ist.

Die Klemmelemente 23, 24 sind vorzugsweise identisch ausgeführt. Es kann sich beispielsweise um geschlossene Klemmhülsen handeln, insbesondere vorgefertigte Presshülsen beispielsweise aus Aluminium oder einem anderen geeigneten Material. Der Innendurchmesser der vorgefertigten Presshülsen 23, 24 ist zweckmäßigerweise geringfügig größer als der doppelte Seildurchmesser, damit zwei Drahtseilelemente 15, 16 bzw. 17, 18 durch die Presshülsen 23, 24 hindurchgeführt werden können, um mittels eines Presswerkzeugs verpresst zu werden. Die axiale Länge der Klemmhülsen 23, 24 ist klein gegen die Länge der Drahtseilelemente 15-18 und vorzugsweise höchstens dreimal, weiter vorzugsweise höchsten doppelt so groß wie der größte Innendurchmesser der Klemmhülsen 23, 24. Andere Ausführungen der Klemmelemente 23, 24 sind denkbar, beispielsweise kann ein Klemmelement 23, 24 aus zwei Halbschalen bestehen, die beispielsweise mittels Schrauben zu einer Klemmhülse verbindbar sind.

Es sind auch andersartige Klemmelemente 23, 24 denkbar. Beispielsweise kann es sich um einfache Drahtstücke handeln, die fest um die Drahtseilelemente 15-18 gewickelt werden. Andere Ausführungen sind beispielsweise vorgefertigte Drahtklammern, Kabelbinder oder Klemmschellen.

Durch das Zusammenklemmen der Drahtseilelemente 15, 16 bzw. 17, 18 mittels der Klemmelemente 23, 24 und die dadurch verursachte Spreizung der Drahtseilelemente 15, 16 bzw. 17, 18 wird die Federsteifigkeit des Dämpfungselements 10 in der zweiten radialen Richtung R2 signifikant erhöht. Die Federsteifigkeit in der zweiten radialen Richtung R2 kann dabei in weiten Grenzen je nach Bedarf durch geeignete Wahl der Seillänge L1, L2 bzw. L1+L2 und/oder des Abstand d zwischen den Einspannungspunkten der zusammengeklemmten Seilelemente 15, 16 bzw. 17, 18 eingestellt werden. Anstelle des Abstands d kann beispielsweise auch der Spreizwinkel α zwischen den zusammengeklemmten Seilelementen 15, 16 bzw. 17, 18 angegeben werden. Die Federsteifigkeit des Dämpfungselements 10 in der axialen Richtung A und in der ersten radialen Richtung R1 wird durch die Klemmelemente 23, 24 vorteilhafterweise im Wesentlichen nicht beeinflusst.

Figur 2 zeigt eine bevorzugte Anwendung des Dämpfungselements 10 aus Figur 1. Ein Körper 25, beispielsweise ein Schaltschrank, soll an einem vertikalen Fundament bzw. Grund 26, beispielsweise einer Schiffswand, schwingungs- und stoßisoliert aufgehängt werden. Zu diesem Zweck sind vorzugsweise mehrere, beispielsweise zwei Dämpfungselemente 10 aus Figur 1 vorgesehen, wobei jeweils das eine Stützelement 11 an dem Körper 25 und das andere Stützelement 12 an dem Grund 26 beispielsweise mittels durch die Befestigungsöffnungen 22 geführten, nicht gezeigten Schrauben befestigt ist. Vorteilhaft sind die Dämpfungselemente 10 so angeordnet, dass die mittels der Klemmelemente 23, 24 verstärkte Schubrichtung R2 vertikal ausgerichtet ist. Auf diese Weise kann in der vertikalen Richtung, in der zusätzlich die Gewichtskraft des Körpers 25 wirkt, eine ausreichend hohe Federsteifigkeit erzielt werden, ohne dass die Federsteifigkeit in der Druckrichtung A signifikant erhöht werden muss. Die Federsteifigkeiten in der vertikalen Schubrichtung R2 und der Druckrichtung A können beispielsweise auf etwa denselben Wert eingestellt sein.

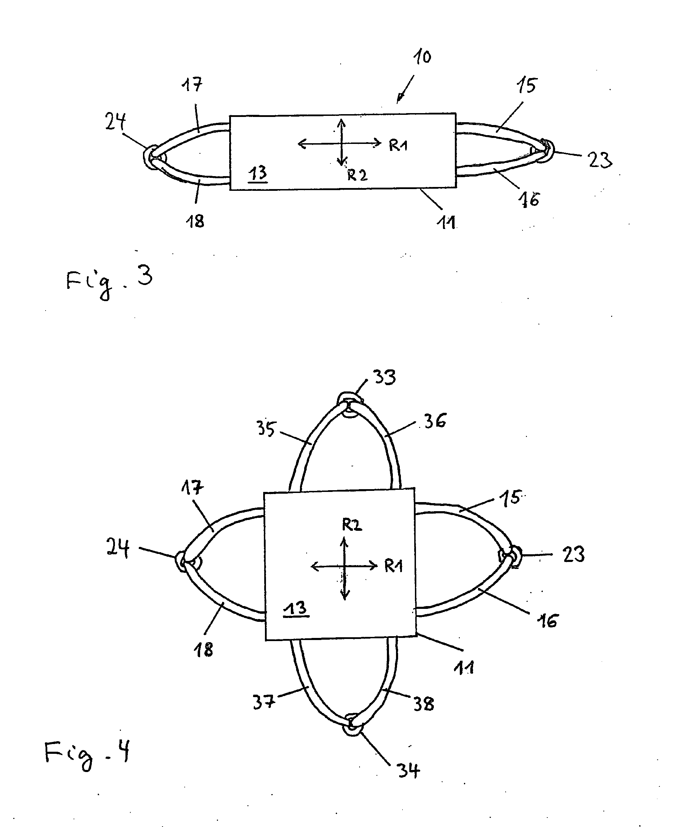

In Figur 4 ist eine weitere Ausführungsform der Erfindung in einer Ansicht entlang der Druckachse A, d.h. senkrecht auf die Anlagefläche 13 des Stützelements 11, dargestellt, wobei Details, wie beispielsweise die Bohrungen 22 weggelassen sind. Zum Vergleich ist in Fig. 3 die Ausführungsform gemäß Figur 1 in derselben Ansicht dargestellt. In Figur 4 sind auch an den anderen beiden Seiten der Stützkörper 11, 12 entsprechende Drahtseilelemente 35, 36 bzw. 37, 38 vorgesehen, die sich bogenförmig zwischen den Stützkörpern 11, 12 erstrecken und die mittels weiterer Klemmhülsen 33, 34 paarweise zusammengeklemmt sind. Auf diese Weise kann zusätzlich zu der Versteifung in der Schubrichtung R2 auch eine Erhöhung der Federsteifigkeit in der Schubrichtung R1 erzeugt werden. Die Federsteifigkeit in der Schubrichtung R1 ist dabei unabhängig von den Federsteifigkeiten in den anderen beiden Richtungen R2, A nach Bedarf einstellbar. Beispielsweise kann die Federsteifigkeit in allen drei Richtungen A, R1, R2 auf etwa den gleichen Wert eingestellt werden.

Weitere Ausführungsformen sind denkbar. Beispielsweise können in Figur 3 und/oder Figur 4 mehr als zwei, insbesondere 2n mit n = 2, 3, 4, ..., Drahtseilelemente nebeneinander angeordnet sein, die insbesondere paarweise zusammengeklemmt sein können. Es ist des Weiteren nicht zwingend erforderlich, dass sämtliche Drahtseilabschnitte paarweise zusammengeklemmt sind. Beispielsweise könnten in Figur 4 die Klemmelemente 33 und 34 entfallen, wenn je nach Anwendung in der Schubrichtung R1 eine geringere Federsteifigkeit zweckmäßig ist.

## Patentansprüche

1. Dämpfungselement (10) insbesondere zur Stoß-, Schwingungs-und/oder Schallisolierung eines Körpers (25) gegen einen Grund (26), wobei das Dämpfungselement (10) zwei starre, voneinander beabstandet angeordnete Stützelemente (11, 12) zur Abstützung an dem Körper (25) bzw. dem Grund (26), und eine Mehrzahl von sich bogenförmig zwischen den Stützelementen (11, 12) erstreckenden Seilelementen (15-18) umfasst, die an den Stützelementen (11, 12) beabstandet voneinander befestigt sind, **dadurch gekennzeichnet, dass** mindestens zwei der Seilelemente (15, 16; 17, 18) in einem Abstand zu beiden Stützelementen (11, 12,) mittels eines Klemmelements (23, 24) zusammengeklemmt sind.

2. Dämpfungselement nach Anspruch 1, **dadurch gekennzeichnet, dass** die Spreizung d bzw. α und die Länge L1, L2 der zusammengeklemmten Seilelemente (15-18) so eingestellt ist, dass im statischen Lastfall die Federsteifigkeit des Dämpfungselements (10) in der versteiften radialen Schubrichtung R2 relativ zu der Federsteifigkeit in der axialen Richtung A einen gewünschten Wert annimmt.

3. Dämpfungselement nach Anspruch 2, **dadurch gekennzeichnet, dass** die Spreizung d bzw. α und die Länge L1, L2 der zusammengeklemmten Seilelemente (15-18) so eingestellt ist, dass im statischen Lastfall die Federsteifigkeit des Dämpfungselements (10) in der versteiften radialen Schubrichtung R2 im Bereich zwischen 1/3 und 3 der Federsteifigkeit in der axialen Richtung A beträgt.

4. Dämpfungselement nach Anspruch 2 oder 3, **dadurch gekennzeichnet, dass** die Spreizung d bzw. α und die Länge L1, L2. der zusammengeklemmten Seilelemente (15-18) so eingestellt ist, dass im statischen Lastfall das beschriebene Verhältnis der Federsteifigkeiten etwa Eins beträgt.

5. Dämpfungselement nach einem der vorangehenden Ansprüche,
**dadurch gekennzeichnet, dass** das Klemmelement (23, 24) etwa mittig zwischen beiden Stützelementen (11, 12) angeordnet ist.

6. Dämpfungselement nach einem der vorangehenden Ansprüche,
**dadurch gekennzeichnet, dass** das Klemmelement (23, 24) eine vorgefertigte Presshülse ist.

7. Dämpfungselement nach einem der vorangehenden Ansprüche,
**dadurch gekennzeichnet, dass** das Klemmelement (23, 24) aus einem mit gängigen Presswerkzeugen verpressbaren Material besteht.

8. Dämpfungselement nach einem der vorangehenden Ansprüche,
**dadurch gekennzeichnet, dass** das Klemmelement (23, 24) aus Aluminium besteht.

9. Dämpfungsanordnung mit einem gegen einen Grund (26) zu isolierenden Körper (25) mittels mindestens eines Dämpfungselements (10) nach einem der vorangehenden Ansprüche, **dadurch gekennzeichnet, dass** die Federsteifigkeiten der Seilelemente (15-18) auf eine Befestigung des Dämpfungselementes (10) an einer vertikalen Wand (26) mit horizontaler Druckachse A und vertikaler Anordnung der verstärkten Schubachse R2 ausgelegt sind.

10. Verfahren zur Herstellung eines Dämpfungselements nach einem der Ansprüche 1 bis 8, **dadurch gekennzeichnet, dass** zwei zusammenzupressende Seilelemente (15-18) durch eine Presshülse (23, 24) geführt werden und die Presshülse (23, 24) mittels eines Presswerkzeugs verpresst wird.
